# EUROPÄISCHE PATENTSCHRIFT

(11) **EP 1 781 529 B1**
(45) Veröffentlichungstag und Bekanntmachung des Hinweises auf die Patenterteilung: **09.01.2008**
(21) Anmeldenummer: 05748047.7
(22) Anmeldetag: 29.04.2005
(51) Int. Cl.: B62J 11/00

(54) **MAGNETISCHER IMPULSGEBER, INSBESONDERE FÜR RADUMLAUFMESSUNGEN BEI FAHRRÄDERN ODER DGL.**
MAGNETIC PULSE GENERATOR, ESPECIALLY FOR MEASURING WHEEL REVOLUTIONS ON BICYCLES OR THE LIKE
EMETTEUR D'IMPULSIONS MAGNETIQUE NOTAMMENT DESTINE A DES MESURES DE TOURS DE ROUE DE BICYCLETTES ET SIMILAIRES

(30) Priorität: 27.08.2004 DE 102004041832
(43) Veröffentlichungstag der Anmeldung: 09.05.2007
(73) Patentinhaber: Cycle Parts GmbH, 76865 Rohrbach (DE)
(72) Erfinder: NOENEN, Hans-Joachim, 67454 Hassloch (DE)
(74) Vertreter: Wüstefeld, Regine Marie
(86) Internationale Anmeldenummer: PCT/DE2005/000794
(87) Internationale Veröffentlichungsnummer: WO 2006/021168

(56) Entgegenhaltungen:
- WO-A-95/23726
- DE-A1- 10 140 349
- US-A- 4 695 099
- US-B1- 6 188 215
- PATENT ABSTRACTS OF JAPAN Bd. 2002, Nr. 07, 3. Juli 2002 (2002-07-03) -& JP 2002 087359 A (HOSIDEN CORP), 27. März 2002 (2002-03-27)
- PATENT ABSTRACTS OF JAPAN Bd. 2000, Nr. 22, 9. März 2001 (2001-03-09) -& JP 2001 130466 A (MIYATA IND CO LTD), 15. Mai 2001 (2001-05-15)
- SIGMA SPORT: "Bike Computer BC 400 - Bedienungsanleitung"[Online] 1997, XP002341977 Neustadt, DE Gefunden im Internet: URL:http://www.sigmasport.de/media/produkt e/bikecomputer/alteanleitungen/pdf/anleitu ng_bc400_97.pdf> [gefunden am 2005-08-24]
- PATENT ABSTRACTS OF JAPAN Bd. 014, Nr. 373 (M-1009), 13. August 1990 (1990-08-13) & JP 02 136384 A (SANYO ELECTRIC CO LTD), 24. Mai 1990 (1990-05-24)

## Beschreibung

Die vorliegende Erfindung betrifft einen magnetischen Impulsgeber, insbesondere für Radumlaufmessungen bei Fahrrädern und dergleichen, mit einem Magnet und einer Befestigungseinrichtung zur Befestigung des Magneten an einem beweglichen Bauteil, insbesondere an einer Speiche eines Rades.

Magnetische Impulsgeber wirken mit Sensoren zusammen. Die Sensoren empfangen die Impulse des Magneten des Impulsgebers. Diese vom Sensor erhaltenen Impulse des Gebers werden von einem mit dem Sensor zusammenwirkenden Computer verarbeitet. Der Sensor und der Computer können verkabelt sein oder es besteht eine drahtlose Übertragung per Funk vom Sensor zum Computer.

Die Kombination Computer-Sensor-Impulsgeber kann beispielsweise bei Fahrrädern dann Anwendung finden, wenn es darauf ankommt, Geschwindigkeit, Entfernung oder Trittfrequenz zu ermitteln. Wenn Geschwindigkeit und Entfernung mittels Fahrradcomputer ermittelt werden sollen, wird der magnetische Impulsgeber benötigt, um bei jeder Radumdrehung einen Impuls im Sensor auszulösen. Dieser Impuls wird über den Sensor zum Fahrradcomputer weitergeleitet. Im Fahrradcomputer ist der Radumfang präzise einprogrammiert. Der ankommende Impuls wird im Computer über geeignete Software mit dem dort einprogrammierten Radumfang multipliziert und aufaddiert, so dass sich die Fahrstrecke ermitteln lässt. Über die interne Uhr des Fahrradcomputers lassen sich dann Impulse (Strecke) pro Zeiteinheit berechnen, woraus sich die Geschwindigkeit ergibt.

Aus der Praxis sind magnetische Impulsgeber bekannt, die zur Befestigung an der Speiche eines Rades eine besondere Formgebung der den Magneten enthaltenden Befestigungseinrichtung aufweisen. Konkret ist an der Befestigungseinrichtung ein Dorn in Form eines Hohlzylinders ausgefräst. Der Dorn weist einen Schlitz auf, in den quer zur Längsachse des Magneten die Speiche des Rades eingelegt wird. In dem Innenraum des hohlzylindrischen Domes erstreckt sich also quer die Speiche.

Zur Fixierung der Befestigungseinrichtung an der Speiche wird eine Schraube in den Innenraum des Domes eingedreht.

Der aus der Praxis bekannte magnetische Impulsgeber weist eine Reihe von Nachteilen auf. Zum einen kann beim Eindrehen der Schraube in den hohlzylindrischen Dorn die Speiche des Rades beschädigt werden. Zum zweiten wird stets ein Werkzeug benötigt, um die Befestigung zu realisieren, was den Montageaufwand erhöht. Schließlich passt der Schlitz im hohlzylindrischen Dorn nur zu Speichen mit einer bestimmten Geometrie. Bei der Vielfalt an Speichenquerschnitten, wie Rundspeichen mit Durchmessern zwischen 1,8 bis 3,4 mm, ist es schwer, den passenden Impulsgeber zu finden und/oder in langwieriger Bastelarbeit an der Speiche zu befestigen. Neben Rundspeichen existieren auch Flachspeichen mit einer Breite bis zu 5,4 mm. Eine Anwendbarkeit des aus der Praxis bekannten magnetischen Impulsgebers auf diese Flachspeichen ist ausgeschlossen.

Aus der DE 101 40 349 A1 ist eine Magnetanbringungsstruktur bekannt, wobei der Magnet im Kopfteil einer Schraube untergebracht ist und die Schraube in das Innengewinde eines Gegenstücks unter Einklemmen der Speiche eingeschraubt wird. Im Gegenstück ist eine Ausnehmung zur Aufnahme der Speiche vorgesehen. Bei dieser Bauform ist nachteilig, dass durch das Schrauben eine aufwendige Befestigung durchgeführt werden muss, dass durch den Schraubkopfteil mit dem Magneten eine große Unwucht entsteht, wenn das Zweirad höhere Geschwindigkeiten erreicht und dass besondere Innenausgestaltungen des Gegenstücks und Gummiauflagen für runde oder flache Speichen erforderlich sind.

Eine weitere Befestigungseinrichtung für einen magnetischen Impulsgeber ergibt sich aus der US 6 188 215 B1. Dort umgreift ein Gehäuse eine Speiche, wobei die Innenausgestaltung des den Magneten aufnehmenden Gehäuses speziell auf die Geometrie und Abmessung der Speiche abgestimmt ist. Folglich ist bei der in Rede stehenden Magnetbefestigung das stark eingeschränkte Anwendungsgebiet nachteilig.

Ein magnetischer Impulsgeber mit dem Merkmalen des Oberbegriff des unabhängigen Anspruchs 1 ist bekannt aus JP 2002. 87 359 A.

Ausgehend von dem bekannten Stand der Technik liegt der Erfindung die Aufgabe zugrunde, mit einem magnetischen Impulsgeber der in Rede stehenden Art,
- eine Beschädigung des Bauteils zu vermeiden, an dem die Befestigung erfolgen soll,
- den Montageaufwand beim Befestigen herabzusetzen und
- eine Anwendung auf Bauteile mit verschiedener Geometrie, insbesondere auf Rundspeichen verschiedener Durchmesser und auch auf Flachspeichen verschiedener Breitenabmessungen, zu ermöglichen.

Die voranstehende Aufgabe wird durch die Merkmale des Patentanspruchs 1 gelöst. Danach ist ein magnetischer Impulsgeber der in Rede stehenden Art derart ausgestaltet und weitergebildet, dass die Befestigungseinrichtung ein das Bauteil umgreifendes Gehäuse umfasst und dass das Gehäuse in der Art eines längsgeschlitzten Rohrstücks ausgebildet ist, wobei die den Längsschlitz bildenden Enden form- und/oder kraftschlüssig miteinander verbindbar sind und deren Abstand zueinander variierbar ist.

Zunächst ist erkannt worden, dass ein magnetischer Impulsgeber der in Rede stehenden Art das Bauteil, an dem er befestigt werden soll, beschädigt, nur auf bestimmte Bauteile anwendbar ist und nur mittels Werkzeug montiert werden kann.

Erfindungsgemäß ist erkannt worden, dass eine Beschädigung des Bauteils vermieden wird, wenn die Befestigung nicht mittels Schraube ausgeführt wird, sondern ein Gehäuse das Bauteil umgreift. Ein Gehäuse bietet den Vorteil, dass es mit das Bauteil schonenden Innenbelägen versehen werden kann. Weiter ist erkannt worden, dass der Nachteil einer Fixierung auf bestimmte Bauteilgeometrien überwunden werden kann, und auf ein Werkzeug bei der Montage verzichtet werden kann, wenn das Gehäuse in der Art eines längsgeschlitzten Rohrstücks ausgebildet ist, wobei die den Längsschlitz bildenden Enden miteinander verbindbar sind und wobei der Abstand zwischen den den Längsschlitz bildenden Enden variierbar ist. Auf diese Weise kann der erfindungsgemäße Impulsgeber auf Bauteile mit Querschnitten unterschiedlicher Abmessungen aufgebracht werden. Der erfindungsgemäße Impulsgeber kann dank des in Querrichtung zweiseitig offenen und zusätzlich in Längsrichtung öffen- und verschließbaren Gehäuses und dank der abstandsveränderlichen Längsöffnung bequem auf das Bauteil, insbesondere eine Speiche, aufgebracht werden und dann durch die Verbindung der den Längsschlitz bzw. die Längsöffnung bildenden Enden am Bauteil befestigt werden.

Eine besonders vorteilhafte Variante, die beiden den Längsschlitz bildenden Enden miteinander zu verbinden, besteht darin, Verbindungsmittel einzusetzen, die eine Rastverbindung ausbilden. Besonders vorteilhaft ist es, wenn die Verbindungsmittel mehrere Rastzähne umfassen, so dass die zur Befestigung erforderliche Kraftwirkung in Abhängigkeit von der Geometrie des Bauteils einstellbar ist. Die Verzahnung der Rastverbindung rastet unter Pressdruck noch fester ein. Anstelle von Verbindungsmitteln, die eine Rastverbindung ausbilden, können auch weitere Verbindungsmittel, wie beispielsweise Eingriffsmittel mit korrespondierenden Ausnehmungen, bajonettartige Verbindungsmittel oder dergleichen Anwendung finden.

Um eine sichere Befestigung zu gewährleisten und auch eine Fremdentfernung des magnetischen Impulsgebers zu erschweren, könnten die Rastverbindungsmittel so konstruiert sein, dass sie nach dem Verschließen nur mit einem Werkzeug, insbesondere einem Schraubenzieher, wieder geöffnet werden können. Grundsätzlich ist eine lösbare Anbringung des Impulsgebers am Bauteil im Hinblick auf Reinigungs- und Wartungstätigkeiten von Vorteil.

Das Gehäuse könnte eine im Querschnitt unsymmetrische Formgebung aufweisen, wobei der größere Abschnitt den Magneten enthält. Auf diese Weise wird Material und damit auch Gewicht gespart, da nur dort Volumen vorhanden sein muss, wo der Magnet angeordnet ist.

Damit der Abstand zwischen den den Längsschlitz bildenden Enden variiert werden kann, ist es von Vorteil, wenn das Gehäuse zwei Gehäuseteile umfasst, die beweglich miteinander verbunden sind. Die Gehäuseteile könnten beispielsweise über ein Scharnier verbunden sein. In herstellungstechnisch vorteilhafter Weise könnten das Scharnier und die Gehäuseteile einstückig ausgebildet sein. Alternativ könnte der erfindungsgemäße magnetische Impulsgeber auch aus miteinander verbundenen Einzelteilen aufgebaut sein. Die bevorzugte einstückige Variante des erfindungsgemäßen Impulsgebers könnte über das Kunststoffspritzverfahren realisiert werden. Hierbei könnte ein Nylonwerkstoff eingesetzt werden, der nach dem Spritzen gewässert wird. Der Scharnierbereich könnte sich durch geringere Materialstärke auszeichnen, so dass nach dem Wässerungsvorgang ein flexibles und reißfestes Scharnier gebildet wird. Auch die Formgebung des Scharniers könnte zur Flexibilität beitragen, indem die Längenabmessung bzw. die Abmessung in Schwenkachsenrichtung geringer ist als die Längenabmessung der Gehäuseteile. Der Scharnierbereich könnte die schwächste Stelle des Gehäuses sein, von der Schwenkachse aus könnte der Scharnierbereich in Querrichtung divergieren und in die materialstärkeren Gehäuseteile übergehen.

Innerhalb des Gehäuses könnte eine Aufnahme für das Bauteil vorgesehen sein, in der sich das Bauteil erstreckt. Die Aufnahme könnte mit Gummi, insbesondere mit einem Gummibelag versehen sein, der in Betriebsstellung das Bauteil kontaktiert und aufgrund der Verbindung der den Längsschlitz bildenden Enden des Gehäuses eine Dreh- und Rutschsicherung ausbildet. Der erfindungsgemäße magnetische Impulsgeber kann dadurch weder in axialer Richtung, noch in koaxialer Richtung seine Position ändern. Eine die Dreh- und Rutschsicherung erhöhende Maßnahme besteht darin, dass der Gummi in Form einer Einlage in der Aufnahme fest angeordnet ist und aus einem extrem rutschhemmenden Material besteht. In konstruktiver Hinsicht ist es zweckmäßig, dass die Längsachse des Gehäuses und die Längsachse des Bauteils in Betriebsstellung im wesentlichen fluchten. Hierdurch wird gewährleistet, dass durch die Gehäuseteile keine Scher- oder Klemmkräfte auf das Bauteil ausgeübt werden. Lediglich die innere Aufnahme des Gehäuses mit den Gummieinlagen sitzen auf dem Bauteil auf.

Als alternative Bauform des erfindungsgemäßen magnetischen Impulsgebers könnte auch ein Gehäuse in Betracht gezogen werden, welches aus zwei Gehäuseteilen in der Art eines in Längsrichtung zweigeteilten Rohrstücks besteht. Auch hier können verschiedenste Verbindungstechniken zur Anwendung kommen, um die Befestigung am Bauteil zu realisieren. Beispielsweise käme eine Steckverbindung in Betracht. Wesentlich ist, dass sichergestellt wird, dass eine hohe Festigkeit der Verbindung gewährleistet ist, wobei die radial nach innen gerichtete Kraft durch die Gummieinlagen bauteilschonend beeinflusst wird.

In besonders vorteilhafter Weise könnte der erfindungsgemäße magnetische Impulsgeber eine geringe Baugröße aufweisen. Insbesondere könnte der Gehäusequerschnitt, der den Magneten enthält, in etwa eine Höhenabmessung in einem Bereich von ca. 6 bis 9 mm, vorzugsweise ca. 7 mm aufweisen. Die einzelnen Abschnitte, ausgehend von dem den Magneten enthaltenden Gehäuseteil über dessen Gummieinlage zu der Gummieinlage des die Lasche für die Rastverbindung enthaltenden Gehäuseteils könnten alle Bestandteile des erfindungsgemäßen Impulsgebers nur wenige mm Bauhöhe aufweisen. Gemäß einem Ausführungsbeispiel könnten sich der Anteil des Magneten auf ca. 3 mm, der Anteil der ersten Gehäusewand auf ca. 1 mm, der Anteil der erste Gummieinlage auf ca. 0, 5 mm, der Anteil einer Speiche auf 2 mm, der Anteil der zweiten Gummieinlage auf ca. 0,5 mm und der Anteil der zweiten Gehäusewand auf ca. 1 mm belaufen.

Die von dem Magneten des erfindungsgemäßen Impulsgebers verursachte Zugkraft könnte ca. 3,8 kg aufweisen. Diese relativ große Magnetstärke erleichtert die Montage, da der Abstand zwischen Magnet und Sensor bis zu 10 mm betragen kann. Zieht man das Anwendungsgebiet Entfernungs- und Geschwindigkeitsermittlung bei Fahrrädern in Betracht, so wird bei Mountainbikes mit Federgabeln die Montage des Impulsgebers und des Sensors wesentlich erleichtert. Es ist hierdurch nicht mehr erforderlich, die genau passende Stelle für den Sensor an der Gabel zu finden, um den kleinsten Abstand zwischen Impulsgeber und Sensor realisieren zu können.

Es gibt nun verschiedene Möglichkeiten, die Lehre der vorliegenden Erfindung in vorteilhafter Weise auszugestalten und weiterzubilden. Dazu ist einerseits auf die dem Patentanspruch 1 nachgeordneten Ansprüche, andererseits auf die nachfolgende Erläuterung eines Ausführungsbeispiels der Erfindung anhand der Zeichnung zu verweisen. In Verbindung mit der Erläuterung des angeführten Ausführungsbeispiels der Erfindung werden auch im allgemeinen bevorzugte Ausgestaltungen und Weiterbildungen der Lehre erläutert. In der Zeichnung zeigen
- Fig. 1: in schematischer Perspektivdarstellung, den erfindungsgemäßen magnetischen Impulsgeber,
- Fig. 2: in verkleinerter Darstellung eine Seitenansicht des Gegenstandes aus Fig. 1
- Fig. 3: in gegenüber Fig. 2 vergrößerter perspektivischer Darstellung das den Magneten enthaltende Gehäuseteil des Gegenstandes aus Fig. 1,
- Fig. 4: in verkleinerter schematischer Darstellung den Gegenstand aus Fig. 1 während der Montage am Bauteil und
- Fig. 5: in gegenüber Fig. 4 vergrößerter Darstellung den Gegenstand aus Fig. 1 in Betriebsstellung in Bezug auf den Sensor.

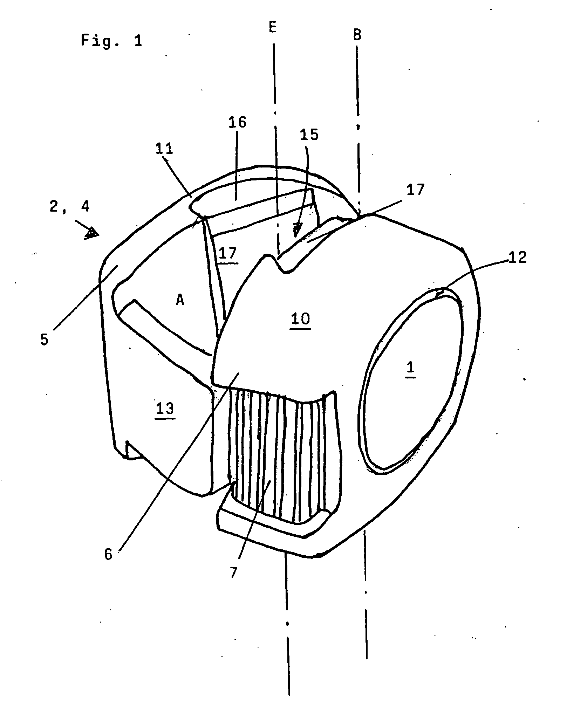

Aus Fig. 1 ergibt sich ein magnetischer Impulsgeber für Radumlaufmessungen bei Fahrrädern mit einem Magnet 1 und einer Befestigungseinrichtung 2 zur Festlegung des Magneten 1 an einer Speiche 3 eines Rades.

Erfindungsgemäß umfasst die Befestigungseinrichtung 2 ein das Bauteil 3 umgreifendes Gehäuse 4. Das Gehäuse 4 ist in der Art eines längsgeschlitzten Rohrstücks ausgebildet, wobei die den Längsschlitz bildenden Enden 5, 6 form- und oder kraftschlüssig miteinander verbindbar sind und deren Abstand A zueinander variierbar ist. Der Begriff Längsschlitz ist im weiteren Sinne zu verstehen. Im Grunde geht es um eine Öffnung des in Querrichtung mit einer Durchtrittsöffnung für die Speiche 3 versehenen Gehäuses 4 in Längsrichtung, die ermöglicht, dass die Speiche 3 umgriffen wird.

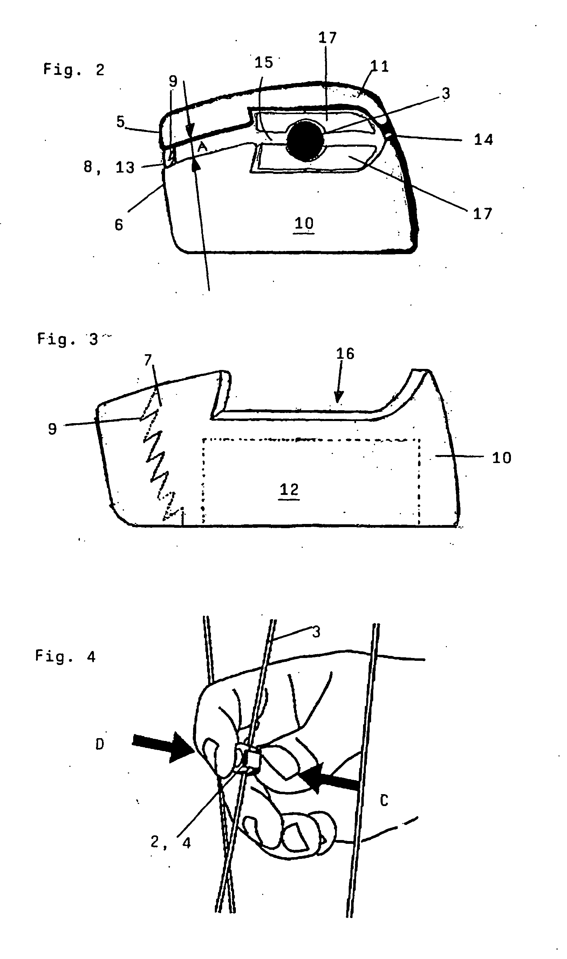

An den den Längsschlitz bildenden Enden 5, 6 des Gehäuses 4 sind Verbindungsmittel 7, 8 vorgesehen, die eine Rastverbindung ausbilden. Die Verbindungsmittel 7, 8 umfassen mehrere Rastzähne 9, so dass die zur Befestigung erforderliche Kraftwirkung in Abhängigkeit von der Geometrie der Speiche 3 einstellbar ist. Je nach Durchmesser, der in Fig. 2 gezeigten Rundspeiche 3 kann die Rastverbindung ausgebildet werden. Die Rastzähne 9 sind gemäß den Fig. 2 und 3 spitz ausgebildet. Je größer die Druckeinwirkung, um so intensiver die Verzahnung, die einen Widerhakeneffekt zeigt. Ein selbsttätiges Lösen der Verbindungsmittel 7, 8 ist durch die Form der Rastzähne 9 ausgeschlossen. Nur unter Einsatz eines Werkzeuges ist die Verbindung der beiden den Längsschlitz bildenden Enden 5, 6 des Gehäuses 4 lösbar. In Fig. 3 sind die Rastzähne 9 mit unterbrochener Linie verdeutlicht.

Besonders aus den Fig. 2 und 3 ist ersichtlich, dass das Gehäuse 4 im Querschnitt eine unsymmetrische Formgebung aufweist. Das Gehäuse 4 weist zwei miteinander verbundene Gehäuseteile 10, 11 auf. Das größere Gehäuseteil 10 enthält eine mit unterbrochener Linie dargestellte Aufnahme 12 für den Magneten 1. Das kleinere Gehäuseteil 11 ist zur Ausbildung des Verbindungsmittels 8 mit einer Lasche 13 versehen, die an der Innenseite mit den Rastzähnen 9 bestückt ist, welche in Betriebsstellung in Eingriff mit den Rastzähnen 9 des Verbindungsmittels 7 des Gehäuseteils 10 gelangen. Fig. 2 zeigt die Betriebsstellung des erfindungsgemäßen Impulsgebers, wobei durch die Formgebung eine geschlossene Form erreicht ist, die den anatomischen Gegebenheiten der Finger einer Hand angepasst ist. In Fig. 4 ist gezeigt, wie der Impulsgeber an der Speiche 3 befestigt wird, wobei gegenläufige Kräfte - verdeutlicht durch die Pfeile C und D - wirken. Zur Ausbildung der Rastverbindung wird vornehmlich Druck in Richtung C aufgebracht, während in Richtung D gegengehalten wird. Die Druckbeaufschlagung in Richtung C wird durch die abfallende Formgebung des Gehäuseteils 11 unterstützt.

Im Zusammenhang der Fig. 1 und 2 ist ersichtlich, dass der Abstand A zwischen den Gehäuseteilen 10 und 11 veränderlich ist, in dem diese über ein Scharnier 14 beweglich miteinander verbunden und um die Schwenkachse B rotierbar sind. Die Gehäuseteile 10, 11 und das Scharnier 14 sind - ähnlich wie bei einer Muschel - einstückig ausgebildet. Es handelt sich bei dem Gehäuse 4 mit seinen Gehäuseteilen 10, 11, und den Verbindungsmitteln 7, 8 um ein Kunststoff-Spritzgussteil. Das Scharnier 14 ist flexibel und reißfest und divergiert quer zur Schwenkachse B zu den materialstärkeren Gehäuseteilen 10, 11 hin.

Die beiden Gehäuseteile 10, 11 bzw. das im Sinne eines Rohrstückes ausgebildete Gehäuse 4 bilden eine Aufnahme 15 für das Bauteil bzw. die Speiche 3 aus, die im Grunde der Durchtrittsöffnung eines Rohrstücks entspricht, jedoch mit besonderer geometrischer Ausformung und besonderer Ausstattung. Dazu weist jedes Gehäuseteil 10, 11 eine Ausnehmung 16 auf, in die ein Gummi in Form einer Gummieinlage 17 fest eingebracht ist. Wie sich aus Fig. 2 ergibt, kontaktieren die beiden Gummieinlagen 17 in Betriebsstellung die Speiche 3 und bilden dabei aufgrund der extrem rutschhemmenden Eigenschaften eine Dreh- und Rutschsicherung aus.

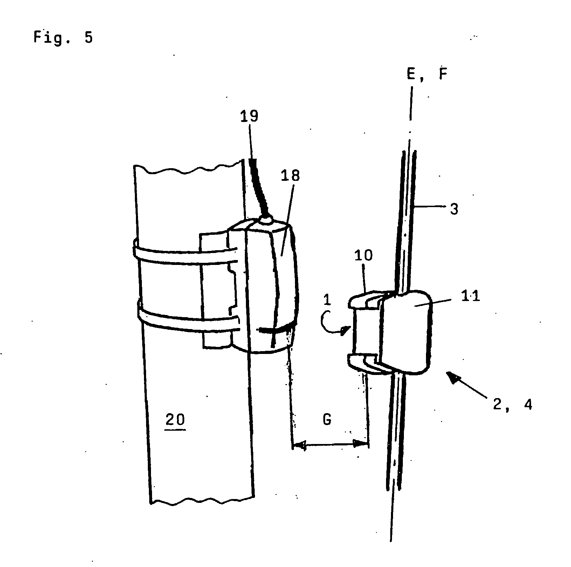

Die Fig. 1 und 5 zeigen, dass die Längsachse E der Aufnahme 15 des Gehäuses 4 und die Längsachse F der Speiche 3 in Betriebsstellung fluchten.

Die Bauhöhe des Gehäuses 4 beträgt beim vorliegenden Ausführungsbeispiel ca. 7 mm. Im Hinblick auf Breiten- und Längendimension des vorliegenden Ausführungsbeispiels wird auf Fig. 4 verwiesen, aus der ersichtlich ist, dass das Bauteil Fingerkuppengröße unterschreitet. Die vom Magneten verursachte Zugkraft beträgt ca. 3,8 kg. Dadurch wird ermöglicht, dass der Abstand G zwischen Magnet 1 und einem die Impulse berührungslos empfangenden Sensor 18 recht groß sein kann und hier ca. 10 mm beträgt. Der Sensor 18 liegt in Form eines Reedschalters vor.

Mit 19 ist eine elektrische Verbindung zum nicht dargestellten Fahrradcomputer bezeichnet. Der Sensor 18 ist an einer Fahrradgabel 20 befestigt.

Hinsichtlich weiterer, in den Figuren nicht gezeigter Merkmale wird auf den allgemeinen Teil der Beschreibung verwiesen.

Abschließend sei darauf hingewiesen, dass die erfindungsgemäße Lehre nicht auf das voranstehend erörterte Ausführungsbeispiel eingeschränkt ist. Vielmehr sind bspw. die unterschiedlichsten Ausbildungen der Gehäuseteile, Verbindungsmittel, Gummieinlagen möglich.

### Bezugszeichenliste

- 1: Magnet
- 2: Befestigungseinrichtung
- 3: Speiche
- 4: Gehäuse
- 5: Ende von 4 (in Längsrichtung)
- 6: Ende von 4 (in Längsrichtung)
- 7: Verbindungsmittel von 10
- 8: Verbindungsmittel von 11
- 9: Rastzähne
- 10: Gehäuseteil
- 11: Gehäuseteil
- 12: Aufnahme in 10 für 1
- 13: Lasche an 11
- 14: Scharnier
- 15: Aufnahme für 3 in 4
- 16: Ausnehmung in 10, 11
- 17: Gummieinlage
- 18: Sensor
- 19: elektrische Verbindung
- 20: Fahrradgabel

- A: Abstand
- B: Schwenkachse
- C: Kraftrichtung
- D: Kraftrichtung
- E: Längsachse von 15
- F: Längsachse von 3
- G: Abstand zwischen 1 und 18

## Patentansprüche

1. Magnetischer Impulsgeber, insbesondere für Radumlaufmessungen bei Fahrrädern und dgl., mit einem Magnet (1) und einer Befestigungseinrichtung (2) zur Festlegung des Magneten (1) an einem beweglichen Bauteil, insbesondere einer Speiche (3) eines Rades, wobei die Befestigungseinrichtung (2) ein das Bauteil umgreifendes Gehäuse (4) umfasst,
**dadurch gekennzeichnet,**
**dass** das Gehäuse (4) in der Art eines längsgeschlitzten Rohrstücks aus-, gebildet ist, wobei die den Längsschlitz bildenden Enden (5, 6) form- und /oder kraftschlüssig miteinander verbindbar sind und deren Abstand (A) zueinander variierbar ist und
**dass** das Gehäuse (4) im Wesentlichen zwei miteinander beweglich verbundene Gehäuseteile (10, 11) umfasst.

2. Magnetischer Impulsgeber nach Anspruch 1, **dadurch gekennzeichnet, dass** zur Verbindung der den Längsschlitz bildenden Enden (5, 6) Verbindungsmittel (7, 8) vorgesehen sind, die eine Rastverbindung ausbilden.

3. Magnetischer Impulsgeber nach Anspruch 2, **dadurch gekennzeichnet, dass** die Verbindungsmittel (7, 8) mehrere Rastzähne (9) umfassen, so dass die zur Befestigung erforderliche Kraftwirkung in Abhängigkeit von der Geometrie des Bauteils einstellbar ist.

4. Magnetischer Impulsgeber nach einem der Ansprüche 1 bis 3, **dadurch gekennzeichnet, dass** die Verbindung der beiden den Längsschlitz bildenden Enden (5, 6) des Gehäuses (4) lösbar ist, insbesondere unter Einsatz eines Werkzeuges.

5. Magnetischer Impulsgeber nach einem der Ansprüche 1 bis 4, **dadurch gekennzeichnet, dass** das Gehäuse (4) im Querschnitt eine unsymmetrische Formgebung aufweist, wobei der größere Abschnitt den Magneten (1) enthält.

6. Magnetischer Impulsgeber nach einem der Ansprüche 1 bis 5, **dadurch gekennzeichnet, dass** das Gehäuse (4) im Wesentlichen zwei miteinander verbundene Gehäuseteile (10, 11) umfasst, wobei ein Gehäuseteil (10) den Magneten (1) enthält.

7. Magnetischer Impulsgeber nach Anspruch 6, **dadurch gekennzeichnet, dass** die Gehäuseteile (10, 11) beweglich miteinander verbunden sind, insbesondere über mindestens ein Scharnier (14).

8. Magnetischer Impulsgeber nach Anspruch 7, **dadurch gekennzeichnet, dass** die Gehäuseteile (10, 11) und das Scharnier (14) einstückig ausgebildet sind.

9. Magnetischer Impulsgeber nach Anspruch 8, **dadurch gekennzeichnet, dass** die Gehäuseteile (10, 11) und das Scharnier (14) aus Kunststoff, insbesondere einem spritzgegossenen und nach dem Spritzen gewässerten Nylonwerkstoff, gefertigt sind.

10. Magnetischer Impulsgeber nach einem der Ansprüche 7 bis 9, **dadurch gekennzeichnet, dass** das Scharnier (14) eine geringere Längenabmessung aufweist als die Gehäuseteile (10, 11).

11. Magnetischer Impulsgeber nach einem der Ansprüche 1 bis 10, **dadurch gekennzeichnet, dass** das Gehäuse (4) eine Aufnahme (15) für das Bauteil, insbesondere die Speiche (3), umfasst.

12. Magnetischer Impulsgeber nach Anspruch 11, **dadurch gekennzeichnet, dass** die Aufnahme (15) zur Ausbildung einer Dreh- und Rutschsicherung mit Gummi versehen ist, der in Betriebsstellung das Bauteil kontaktiert.

13. Magnetischer Impulsgeber nach Anspruch 12, **dadurch gekennzeichnet, dass** der Gummi in Form einer Gummieinlage (17) in der Aufnahme (15), insbesondere in einer Ausnehmung (16) eines jeden Gehäuseteiles (10, 11), fest angeordnet ist.

14. Magnetischer Impulsgeber nach einem der Ansprüche 1 bis 13, **dadurch gekennzeichnet, dass** die Längsachse (E) des Gehäuses (4) bzw. der Aufnahme (15) des Gehäuses (4) und die Längsachse (F) des Bauteils in Betriebsstellung im wesentlichen fluchten.

15. Magnetischer Impulsgeber nach einem der Ansprüche 1 bis 5 oder 11 bis 14, **dadurch gekennzeichnet, dass** das Gehäuse aus zwei Gehäuseteilen in der Art eines in Längsrichtung zweigeteilten Rohrstücks besteht.

16. Magnetischer Impulsgeber nach einem der Ansprüche 1 bis 15, **dadurch gekennzeichnet, dass** das Gehäuse (4) eine Bauhöhe von ca. 7 mm aufweist.

17. Magnetischer Impulsgeber nach einem der Ansprüche 1 bis 16, **dadurch gekennzeichnet, dass** die vom Magneten (1) verursachte Zugkraft ca. 3,8 kg beträgt und dass der Abstand (G) zwischen Magnet (1) und einem die Impulse berührungslos empfangenden Sensor (18) bis zu ca. 10 mm beträgt.

## Claims

1. A magnetic pulse generator, in particular for measuring wheel revolutions of bicycles and the like, comprising a magnet (1) and an attachment device (2) for attaching the magnet (1) to a movable component, in particular to a spoke (3) of a wheel, wherein the attachment device (2) comprises a housing (4) that encompasses the component,
**characterised in that**
the housing (4) is designed in the manner of a longitudinally slit tubular piece, wherein the ends (5, 6) that form the longitudinal slit can be connected to each other in a positive-locking and/or non-positive manner, with their spacing (A) from each other being variable, and
**in that** the housing (4) essentially comprises two housing parts (10, 11) that are movably connected to each other.

2. The magnetic pulse generator according to claim 1, **characterised in that** connection means (7, 8) are provided for connecting the ends (5, 6) that form the longitudinal slit, which connection means (7, 8) form a snap-in connection.

3. The magnetic pulse generator according to claim 2, **characterised in that** the connection means (7, 8) comprise several snap-in teeth (9) so that the force effect required for attachment can be set depending on the geometry of the component.

4. The magnetic pulse generator according to any one of claims 1 to 3, **characterised in that** the connection of the two ends (5, 6) of the housing (4), which ends (5, 6) form the longitudinal slit, can be undone, in particular with the use of a tool.

5. The magnetic pulse generator according to any one of claims 1 to 4, **characterised in that** the cross section of the housing (4) is non-symmetrical in shape, wherein the larger section comprises the magnet (1).

6. The magnetic pulse generator according to any one of claims 1 to 5, **characterised in that** the housing (4) essentially comprises two housing parts (10, 11) that are connected to each other, wherein a housing part (10) comprises the magnet (1).

7. The magnetic pulse generator according to claim 6, **characterised in that** the housing parts (10, 11) are movably connected to each other, in particular by way of at least one hinge (14).

8. The magnetic pulse generator according to claim 7, **characterised in that** the housing parts (10, 11) and the hinge (14) are designed in one piece.

9. The magnetic pulse generator according to claim 8, **characterised in that** the housing parts (10, 11) and the hinge (14) are made from plastic, in particular from an injection moulded nylon material to which water has been applied after injection moulding.

10. The magnetic pulse generator according to any one of claims 7 to 9, **characterised in that** the longitudinal dimension of the hinge (14) is shorter than that of the housing parts (10, 11).

11. The magnetic pulse generator according to any one of claims 1 to 10, **characterised in that** the housing (4) comprises a retainer (15) for the component, in particular the spoke (3).

12. The magnetic pulse generator according to claim 11, **characterised in that** in order to form a device that prevents rotation and slippage, the retainer (15) comprises rubber, which in the operating position contacts the component.

13. The magnetic pulse generator according to claim 12, **characterised in that** the rubber in the form of a rubber insert (17)is arranged so as to be fixed, in the retainer (15), in particular in a recess (16) in each housing part (10, 11).

14. The magnetic pulse generator according to any one of claims 1 to 13, **characterised in that** the longitudinal axis (E) of the housing (4) or of the retainer (15) of the housing (4) and the longitudinal axis (F) of the component in the operating position are essentially in alignment.

15. The magnetic pulse generator according to any one of claims 1 to 5 or 11 to 14, **characterised in that** the housing comprises two housing parts in the manner of a tubular piece that is divided into two in longitudinal direction.

16. The magnetic pulse generator according to any one of claims 1 to 15, **characterised in that** the design height of the housing (4) is approximately 7 mm.

17. The magnetic pulse generator according to any one of claims 1 to 16, **characterised in that** the tensile force generated by the magnet (1) is approximately 3.8 kg, and **in that** the space (G) between the magnet (1) and a sensor (18) that receives the pulses in a noncontacting manner is up to approximately 10 mm.

## Revendications

1. Générateur d'impulsion magnétique, en particulier pour des mesures de tour de roue pour des vélos et similaires, comprenant un aimant (1) et un dispositif de fixation (2) pour la fixation de l'aimant (1) sur un composant mobile, en particulier un rayon (3) d'une roue, le dispositif de fixation (2) comprenant un boîtier (4) entourant le composant,
**caractérisé en ce que**
le boîtier (4) est réalisé à la façon d'un bout de tube fendu dans la longueur, les extrémités (5, 6) formant la fente longitudinale pouvant être reliées entre elles par complémentarité de forme et/ou par adhérence des forces et dont l'espacement (A) peut varier, et
**en ce que** le boîtier (4) comprend essentiellement deux parties de boîtier (10, 11) reliées entre elles de façon mobile.

2. Générateur d'impulsion magnétique selon la revendication 1, **caractérisé en ce que**, pour la liaison des extrémités (5, 6) formant la fente longitudinale, il est prévu des moyens de liaison (7, 8) qui forment une liaison par encliquetage.

3. Générateur d'impulsion magnétique selon la revendication 2, **caractérisé en ce que** les moyens de liaison (7, 8) comprennent plusieurs dents d'encliquetage (9), de sorte que l'effet de force nécessaire pour la fixation peut être réglé en fonction de la géométrie du composant.

4. Générateur d'impulsion magnétique selon l'une quelconque des revendications 1 à 3, **caractérisé en ce que** la liaison des deux extrémités (5, 6) formant la fente longitudinale du boîtier (4) est amovible, en particulier avec l'utilisation d'un outil.

5. Générateur d'impulsion magnétique selon l'une quelconque des revendications 1 à 4, **caractérisé en ce que** le boîtier (4) présente en section une forme dissymétrique, la plus grande partie contenant l' aimant (1).

6. Générateur d'impulsion magnétique selon l'une quelconque des revendications 1 à 5, **caractérisé en ce que** le boîtier (4) comprend essentiellement deux parties de boîtier (10, 11) reliées entre elles, une partie de boîtier (10) contenant l'aimant (1).

7. Générateur d'impulsion magnétique selon la revendication 6, **caractérisé en ce que** les parties de boîtier (10, 11) sont reliées entre elles de façon mobile, en particulier au moyen d'au moins une charnière (14).

8. Générateur d'impulsion magnétique selon la revendication 7, **caractérisé en ce que** les parties de boîtier (10, 11) et la charnière (14) sont reliées d'une seule pièce.

9. Générateur d'impulsion magnétique selon la revendication 8, **caractérisé en ce que** les parties de boîtier (10, 11) et la charnière (14) sont fabriquées en matière synthétique, en particulier un matériau nylon moulé par injection et humecté après l'injection.

10. Générateur d'impulsion magnétique selon l'une quelconque des revendications 7 à 9, **caractérisé en ce que** la charnière (14) présente une dimension en longueur plus faible que les parties de boîtier (10, 11).

11. Générateur d'impulsion magnétique selon l'une quelconque des revendications 1 à 10, **caractérisé en ce que** le boîtier (4) comprend un logement (15) pour le composant, en particulier le rayon (3).

12. Générateur d'impulsion magnétique selon la revendication 11, **caractérisé en ce que** le logement (15) est doté pour la réalisation d'un blocage en rotation et en glissement de caoutchouc qui est en contact avec le composant dans la position de service.

13. Générateur d'impulsion magnétique selon la revendication 12, **caractérisé en ce que** le caoutchouc est disposé de façon fixe sous la forme d'une insertion de caoutchouc (17) dans le logement (15) et en particulier dans un évidement (16) de chaque partie de boîtier (10, 11).

14. Générateur d'impulsion magnétique selon l'une quelconque des revendications 1 à 13, **caractérisé en ce que** l'axe longitudinal (E) du boîtier (4) resp. du logement (15) du boîtier (4) et l'axe longitudinal (F) du composant sont sensiblement alignés dans la position de service.

15. Générateur d'impulsion magnétique selon l'une quelconque des revendications 1 à 5 ou 11 à 14,
**caractérisé en ce que** le boîtier est constitué de deux parties de boîtier à la façon d'un bout de tube divisé en deux dans le sens de la longueur.

16. Générateur d'impulsion magnétique selon l'une quelconque des revendications 1 à 15, **caractérisé en ce que** le boîtier (4) présente une hauteur de construction d'environ 7 mm.

17. Générateur d'impulsion magnétique selon l'une quelconque des revendications 1 à 16, **caractérisé en ce que** la force de traction causée par l'aimant (1) est d'environ 3,8 kg et **en ce que** l'espacement (G) entre l'aimant (1) et un capteur (18) recevant les impulsions sans contact va jusqu'à environ 10 mm.
